# EUROPEAN PATENT APPLICATION

(11) **EP 4 712 587 A1**
(43) Date of publication of application: **18.03.2026**
(21) Application number: 24807458.5
(22) Date of filing: 10.05.2024
(51) Int. Cl.: H04W 52/02, H04W 84/12, H04W 88/06, H04W 88/10

(54) **METHOD AND DEVICE FOR SAVING AP POWER IN WIRELESS LAN**

(30) Priority: 12.05.2023 KR 20230061911
(71) Applicant: Electronics and Telecommunications Research Institute, Daejeon 34129 (KR)
(72) Inventor: HWANG, Sung Hyun, Daejeon 34129 (KR); KANG, Kyu Min, Daejeon 34129 (KR); KIM, Yong Ho, Incheon 21562 (KR); MOON, Ju Seong, Osan-si, Gyeonggi-do 18101 (KR)
(74) Representative: Betten & Resch
(86) International application number: PCT/KR2024/006337
(87) International publication number: WO 2024/237583

(57) **Abstract**

A method and a device for saving AP power in a wireless LAN are disclosed. This method of an AP comprises the steps of: transmitting a first frame including AP power saving information to one or more STAs; operating in an AP doze state in an AP doze period indicated by the AP power saving information; and operating in an AP awake state in an AP awake period indicated by the AP power saving information.

## Description

### [Technical Field]

The present disclosure relates to a wireless local area network (LAN) communication technique, and more particularly, to a technique for power saving of an access point (AP).

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

As applications demanding higher throughput and real-time transmission emerge, the IEEE 802.11bn standard, a Ultra High Reliability (UHR) wireless LAN technology, is being developed. The IEEE 802.1 1bn standard can support techniques for improving reliability and/or low-latency techniques. Power-saving techniques may be required in the wireless LAN. The power-saving techniques may be required not only for stations (STAs) but also for access points (APs).

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for power saving of an access point (AP) in a wireless LAN.

### [Technical Solution]

A method of an AP, according to exemplary embodiments of the present disclosure for achieving the above-described objective, may comprise: transmitting a first frame including AP power saving information to one or more stations (STAs); operating in an AP doze state in an AP doze period indicated by the AP power saving information; and operating in an AP awake state in an AP awake period indicated by the AP power saving information, wherein communication between the AP and the one or more STAs is not performed in the AP doze period, and communication between the AP and the one or more STAs is performed in the AP awake period.

The AP power saving information may include at least one of AP doze information or AP awake information, the AP doze information may include at least one of a start time, an end time, a length, or a periodicity of the AP doze period, and the AP awake information may include at least one of a start time, an end time, a length, or a periodicity of the AP awake period.

The AP power saving information may include an AP awake counter, a first value of the AP awake counter may indicate that the AP operates in the AP doze state after transmission of the first frame, and a second value of the AP awake counter may indicate that the AP operates in the AP awake state after transmission of the first frame.

The operating in the AP awake state may comprise: performing at least one of a channel detection operation or a backoff operation during a preconfigured period after or before a start time of the AP awake period to set a network allocation vector (NAV).

The operating in the AP awake state may comprise: transmitting a second frame including information indicating a quiet period to the one or more STAs before an operation state of the AP transitions from the AP awake state to the AP doze state, and the quiet period may be configured to correspond to the AP doze period after the AP awake period.

The operating in the AP awake state may comprise: transmitting a third frame including information indicating release of the quiet period to the one or more STAs to extend the AP awake period, and communication between the AP and the one or more STAs may be performed in the extended AP awake period.

The operating in the AP awake state may comprise: transmitting a fourth frame including information indicating discontinuation of use of a link on which the AP operates to the one or more STAs before an operation state of the AP transitions from the AP awake state to the AP doze state, the information indicating discontinuation of use of the link may be first traffic identifier (TID)-to-link mapping information, and the first TID-to-link mapping information may indicate that no TID is mapped to the link.

The operating in the AP awake state may comprise: transmitting a fifth frame including information indicating initiation of use of the link to the one or more STAs to extend the AP awake period, the information indicating initiation of use of the link may be second TID-to-link mapping information, the second TID-to-link mapping information may indicate that one or more TIDs are mapped to the link, and communication between the AP and the one or more STAs may be performed in the extended AP awake period.

The operating in the AP awake state may comprise: receiving a sixth frame from a first STA among the one or more STAs; identifying a transmission end time of the sixth frame based on a duration field included in the sixth frame; and in response to the transmission end time being after an end time of the AP awake period, extending the AP awake period.

The operating in the AP awake state may comprise: receiving a seventh frame from a first STA among the one or more STAs; and determining whether to extend the AP awake period based on information included in the seventh frame, wherein the information included in the seventh frame may indicate whether data to be transmitted exists in the first STA, the AP awake period may be determined to be extended when data to be transmitted exists in the first STA, and the AP awake period may be determined not to be extended when data to be transmitted does not exist in the first STA.

The operating in the AP awake state may comprise: performing a channel detection operation in a preconfigured period within the AP awake period; and in response to determining that communication is not performed based on a result of the channel detection operation, transmitting an eighth frame including information indicating early termination of the AP awake period to the one or more STAs.

A method of a station (STA), according to exemplary embodiments of the present disclosure for achieving the above-described objective, may comprise: receiving a first frame including access point (AP) power saving information from an AP; identifying an AP doze period and an AP awake period based on the AP power saving information; and performing communication with the AP in the AP awake period, wherein communication between the STA and the AP is not performed in the AP doze period.

The AP power saving information may include at least one of AP doze information or AP awake information, the AP doze information may include at least one of a start time, an end time, a length, or a periodicity of the AP doze period, and the AP awake information may include at least one of a start time, an end time, a length, or a periodicity of the AP awake period.

The AP power saving information may include an AP awake counter, a first value of the AP awake counter may indicate that the AP operates in the AP doze state after transmission of the first frame, and a second value of the AP awake counter may indicate that the AP operates in the AP awake state after transmission of the first frame.

The performing of the communication with the AP may comprise: receiving a second frame including information indicating a quiet period from the AP before an operation state of the AP transitions from the AP awake state to the AP doze state, and the quiet period may be configured to correspond to the AP doze period after the AP awake period.

The performing of the communication with the AP may comprise: receiving a third frame including information indicating release of the quiet period from the AP to extend the AP awake period, and communication between the AP and the STA may be performed in the extended AP awake period.

The performing of the communication with the AP may comprise: receiving a fourth frame including information indicating discontinuation of use of a link on which the AP operates from the AP before an operation state of the AP transitions from the AP awake state to the AP doze state, the information indicating discontinuation of use of the link may be first traffic identifier (TID)-to-link mapping information, and the first TID-to-link mapping information may indicate that no TID is mapped to the link.

The performing of the communication with the AP may comprise: receiving a fifth frame including information indicating initiation of use of the link from the AP to extend the AP awake period, the information indicating initiation of use of the link may be second TID-to-link mapping information, the second TID-to-link mapping information may indicate that one or more TIDs are mapped to the link, and communication between the AP and the STA may be performed in the extended AP awake period.

The performing of the communication with the AP may comprise: transmitting a sixth frame including a duration field indicating a transmission end time for the sixth frame to the AP; and in response to the transmission end time for the sixth frame being after an end time of the AP awake period, receiving information indicating extension of the AP awake period from the AP, wherein the AP awake period is not extended when the transmission end time for the sixth frame is before the end time of the AP awake period.

The performing of the communication with the AP may comprise: transmitting a seventh frame including information indicating whether data to be transmitted exists in the STA to the AP; and in response to data to be transmitted existing in the STA, receiving information indicating extension of the AP awake period from the AP, wherein the AP awake period is not extended when data to be transmitted does not exist in the STA.

### [Advantageous Effects]

According to the present disclosure, an AP can perform a power-saving operation. The power-saving operation can be performed periodically or aperiodically. When the AP's power-saving operation is enabled, power consumption at the AP can decrease. While the AP is performing the power-saving operation, STA(s) communicating with the AP may not transmit frames to the AP. In other words, while the AP is performing the power-saving operation, unnecessary frame transmissions can be prevented. A power-saving period during which the AP performs the power-saving operation can change depending on a communication condition, and the AP's power-saving operations and/or communication can be performed smoothly.

### [Description of Drawings]

FIG. 1 is a conceptual diagram illustrating a first exemplary embodiment of a wireless LAN system.
FIG. 2 is a block diagram illustrating a first exemplary embodiment of a communication node constituting a wireless LAN system.
FIG. 3 is a conceptual diagram illustrating a first exemplary embodiment of a multi-link configured between multi-link devices (MLDs).
FIG. 4 is a sequence chart illustrating a first exemplary embodiment of a negotiation procedure for a multi-link operation in a wireless LAN system.
FIG. 5A and FIG. 5B are timing diagrams illustrating exemplary embodiments of a power saving operation.
FIGS. 6A and 6B are timing diagrams illustrating exemplary embodiments of a power saving operation.
FIGS. 7A and 7B are timing diagrams illustrating exemplary embodiments of a power saving operation.
FIGS. 8A and 8B are timing diagrams illustrating exemplary embodiments of a power saving operation.
FIG. 9 is a timing diagram illustrating exemplary embodiments of power a saving operation.
FIG. 10 is a timing diagram illustrating exemplary embodiments of a power saving operation.
FIG. 11 is a timing diagram illustrating exemplary embodiments of a power saving operation.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'. The names of frames proposed in the present disclosure may be generalized such as first frame, second frame, third frame, and the like. In the present disclosure, a transmission time may mean a start time of frame transmission and/or an end time of frame transmission, and a reception time may mean a start time of frame reception and/or an end time of frame reception. Time may be interpreted as a time point depending on a context.

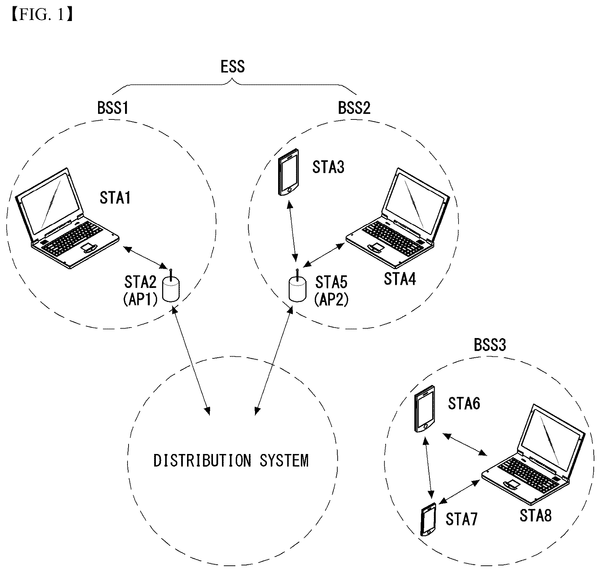

FIG. 1 is a conceptual diagram illustrating a first exemplary embodiment of a wireless LAN system.

Referring to FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In exemplary embodiments below, a station performing functions as an access point may be referred to as an 'access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. That is, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

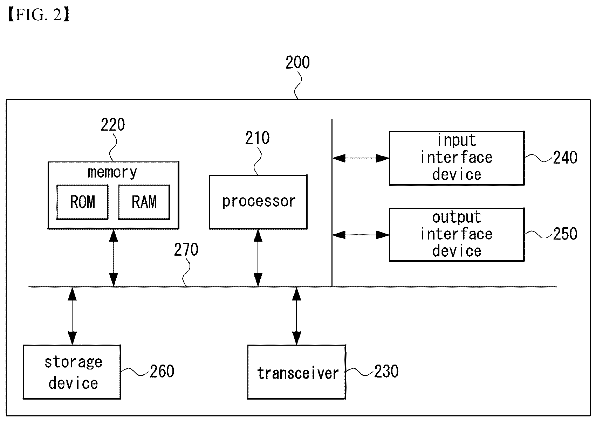

FIG. 2 is a block diagram illustrating a first exemplary embodiment of a communication node constituting a wireless LAN system.

Referring to FIG. 2, a communication node 200 may be an AP, STA, AP MLD, STA MLD, EMLSR AP MLD, or EMLSR STA MLD. The STA may be a non-AP STA. An operating channel width supported by the AP may be 20 megahertz (MHz), 80 MHz, 160 MHz, or the like. An operating channel width supported by the STA may be 20 MHz, 80 MHz, or the like. In the present disclosure, an AP may be interpreted as an AP MLD or EMLSR AP MLD depending on a context, a STA may be interpreted as a STA MLD or EMLSR STA MLD depending on a context, and a MLD may be interpreted as an AP MLD, STA MLD, or EMLSR AP MLD, or EMLSR STA MLD depending on a context. The EMLSR operation may include a MLSR operation. An EMLSR may be interpreted as a MLSR depending on a context, and a MLSR may be interpreted as an EMLSR depending on a context. Operations of an AP MLD may be interpreted as operations of an AP affiliated with the AP MLD, and operations of an AP may be interpreted as operations of an AP MLD affiliated with the AP. Operations of a STA MLD may be interpreted as operations of a STA affiliated with the STA MLD, and operations of a STA may be interpreted as operations of a STA MLD affiliated with the STA.

The communication node 200 may include at least one processor 210, a memory 220, and a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, and the storage device 260 through a dedicated interface.

The processor 210 may execute program commands stored in at least one of the memory 220 and the storage device 260. The processor 210 may refer to a central processing unit (CPU), a graphics processing unit (GPU), or a dedicated processor on which the methods according to the exemplary embodiments of the present invention are performed. Each of the memory 220 and the storage device 260 may be configured as at least one of a volatile storage medium and a nonvolatile storage medium. For example, the memory 220 may be configured with at least one of a read only memory (ROM) and a random access memory (RAM).

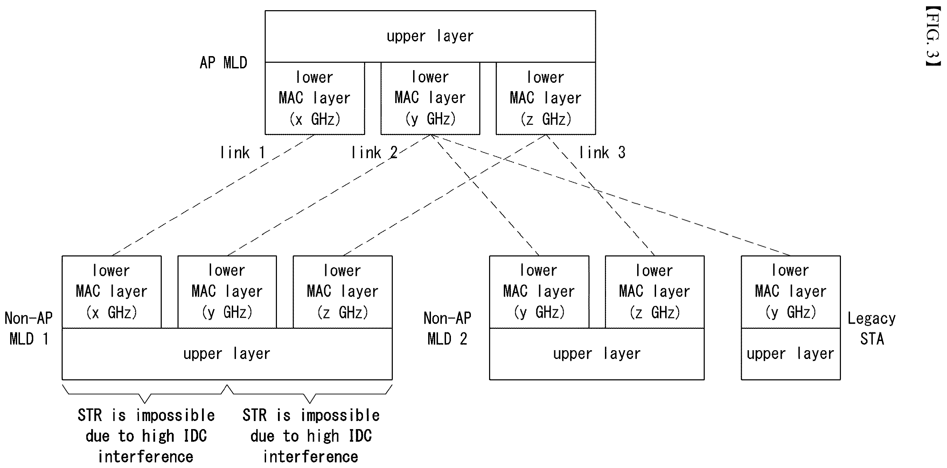

FIG. 3 is a conceptual diagram illustrating a first exemplary embodiment of a multi-link configured between multi-link devices (MLDs).

Referring to FIG. 3, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD). The AP of the AP MLD may mean an AP affiliated with the AP MLD. The STA of the STA MLD may mean a STA affiliated with the STA MLD.

The MLD may transmit and receive frames in multiple links by using a noncontiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

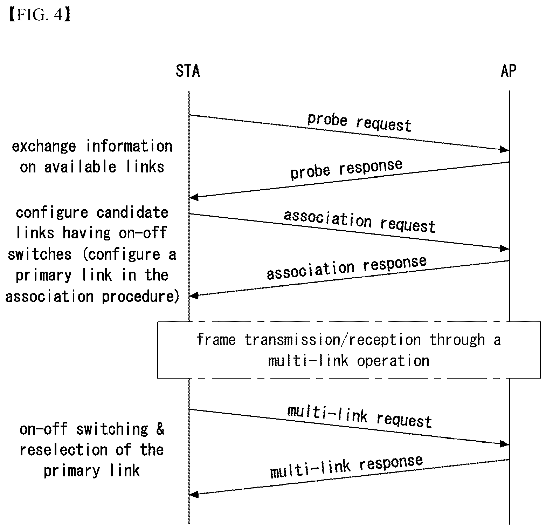

FIG. 4 is a sequence chart illustrating a first exemplary embodiment of a negotiation procedure for a multi-link operation in a wireless LAN system.

Referring to FIG. 4, an access procedure between a STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more APs using a passive scanning scheme or an active scanning scheme. When the passive scanning scheme is used, the STA may detect one or more APs by overhearing beacons transmitted by the one or more APs. When the active scanning scheme is used, the STA may transmit a probe request frame, and may detect one or more APs by receiving probe response frames that are responses to the probe request frame from the one or more APs.

When the one or more APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step, and perform the association step with the selected AP. That is, the STA may transmit an association request frame to the selected AP, and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between a STA and an AP. In this case, multi-link information elements (ML IEs) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA may transmit information of link(s) to be used for the multi-link operation. The negotiation procedure for the multi-link operation may be performed in the access procedure (e.g., association step) between the STA and the AP, and information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

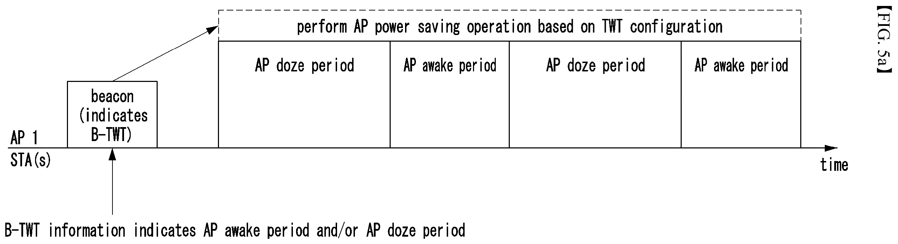

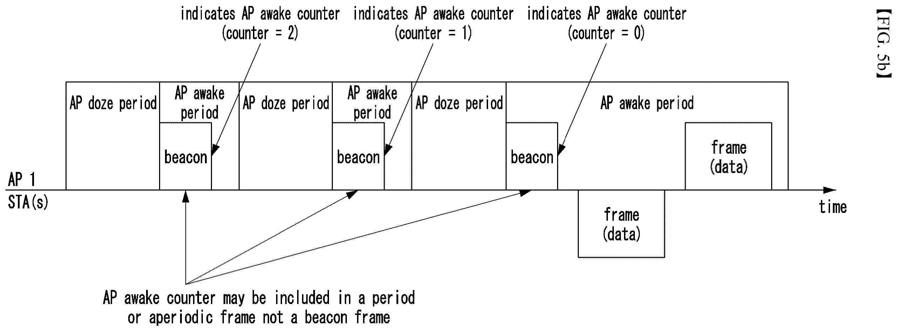

FIG. 5A and FIG. 5B are timing diagrams illustrating exemplary embodiments of a power saving operation.

Referring to FIG. 5A and FIG. 5B, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with a STA MLD or STA(s) not affiliated with a STA MLD.

The AP 1 may perform a power saving operation. A power saving operation performed in an AP (e.g., AP 1) may be referred to as an AP power saving operation. A power saving operation performed in a STA may be referred to as a STA power saving operation. In the present disclosure, a power saving operation may be interpreted as an AP power saving operation and/or a STA power saving operation depending on a context. In the power saving operation of the AP 1, the AP 1 may operate in an AP doze state or an AP awake state. In the AP doze state, the AP 1 may not perform at least one of a frame transmission operation, a frame reception operation, or a channel detection operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a clear channel assessment (CCA) operation.

A period during which the AP (e.g., AP 1) operates in the AP doze state (e.g., a period during which the AP performs an AP doze operation) may be referred to as an AP doze period. A period during which the AP (e.g., AP 1) operates in the AP awake state (e.g., a period during which the AP performs an AP awake operation) may be referred to as an AP awake period. When the AP 1 operates in the AP awake state, the STA(s) may transmit frames to the AP 1, and the STA(s) may receive frames from the AP 1. When the AP 1 operates in the AP doze state, the STA(s) may not transmit frames to the AP 1, and the STA(s) may not perform operation(s) to receive frames from the AP 1. When the AP 1 operates in the AP doze state, the STA(s) (e.g., STA(s) associated with the AP 1) may operate in a doze state (e.g., STA doze state). When the AP 1 operates in the AP awake state, the STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

In the exemplary embodiment of FIG. 5A, the AP 1 may transmit a beacon frame on the first link. The beacon frame may include target wake time (TWT) information (e.g., broadcast TWT information). In the present disclosure, TWT information may refer to broadcast TWT information and/or individual TWT information. The broadcast TWT information may be referred to as broadcast (B)-TWT information. The individual TWT information may be referred to as individual (I)-TWT information. The B-TWT information may be included in the beacon frame in form of information elements. The B-TWT information may be TWT configuration (e.g., TWT configuration information). The B-TWT information may include information indicating that the AP 1 performs a power saving operation based on a TWT. The B-TWT information may include at least one of a TWT identifier (ID), AP doze information, or AP awake information. The B-TWT information may refer to AP power saving information. The AP power saving information may include AP doze information and/or AP awake information. The TWT ID may be an ID of a TWT for the AP power saving operation. The TWT ID may be set to a binary number 11111 or a decimal number 31. The AP doze information may include at least one of a start time, a length, an end time, or a periodicity of an AP doze period. The AP awake information may include at least one of a start time, a length, an end time, or a periodicity of an AP awake period. The AP doze information and the AP awake information may have various forms such as information elements, subfields, or fields.

The B-TWT information may include AP doze information but not AP awake information. In this case, a communication node (e.g., AP, STA) may estimate a period other than an AP doze period indicated by the AP doze information as an AP awake period. The B-TWT information may include AP awake information but not AP doze information. In this case, a communication node (e.g., AP, STA) may estimate a period other than an AP awake period indicated by the AP awake information as an AP doze period.

The STA(s) may receive the beacon frame from the AP and may identify information element(s) included in the beacon frame. The information element(s) included in the beacon frame may include the B-TWT information. If the TWT ID of the B-TWT information included in the beacon frame is an ID of a TWT for the AP power saving operation, the STA(s) may operate based on the AP doze information and/or the AP awake information included in the beacon frame. In other words, the STA(s) may perform operations according to the AP doze state, and the STA(s) may perform operations according to the AP awake state. The B-TWT information may include information indicating a start time of the power saving operation of the AP 1.

The AP 1 may transmit the B-TWT information using a frame (e.g., probe response frame) other than the beacon frame. The frame including the B-TWT information may be a broadcast frame. The broadcast frame may be transmitted in a broadcast manner. For example, a receiver address field present in a MAC header of the broadcast frame may be set to a broadcast address. The STA(s) may receive the B-TWT information from the AP 1, and may identify an AP doze period and an AP awake period based on the B-TWT information. The STA(s) may not transmit frames to the AP 1 in the AP doze period. The STA(s) may transmit frames to the AP 1 in the AP awake period. The STA(s) may perform peer-to-peer (P2P) communications (e.g., direct communications) in the AP doze period. In other words, a STA 1 may communicate with a STA 2 in the AP doze period. When STA(s) perform direct communications, destinations of frames transmitted by the STA(s) in the AP doze period may not be the AP 1. In other words, in the AP doze period, the STA(s) may transmit frames to destinations other than the AP 1. A reason why the STA(s) perform direct communications in the AP doze period may be because the AP 1 cannot transmit and receive frames in the AP doze period.

In the AP doze period, the STA(s) may perform a power saving operation. In other words, the STA(s) may perform the power saving operation instead of performing direct communications. For example, the STA(s) may operate in a doze state (e.g., STA doze state) in the AP doze period. The STA(s) (e.g., STA(s) in the doze state) may not perform frame transmission and/or reception operations in the AP doze period. The STA(s) may operate in an awake state (e.g., STA awake state) in the AP awake period. The STA(s) (e.g., STA(s) in the awake state) may perform frame transmission and/or reception operations in the AP awake period.

The AP 1 may negotiate an AP doze period and/or AP awake period with the STA(s). The negotiation procedure of the AP doze period and/or the AP awake period may be performed based on a procedure of transmitting and receiving B-TWT information and/or a procedure of configuring a B-TWT. In other words, the AP 1 may perform the negotiation procedure of an AP doze period and/or AP awake period with a plurality of STAs (e.g., all STAs associated with the AP 1). Alternatively, the negotiation procedure of an AP doze period and/or AP awake period may be performed based on a procedure of transmitting and receiving I-TWT information and/or a procedure of configuring an I-TWT. In other words, the AP 1 may perform the negotiation procedure of an AP doze period and/or AP awake period individually with each STA. In this case, an AP doze period and/or AP awake period for each of the STAs may be configured independently. The I-TWT information may refer to AP power saving information. The AP power saving information may include AP doze information and/or AP awake information. The procedure of transmitting and receiving I-TWT information and/or the procedure for configuring an I-TWT may be performed through exchange of broadcast frame(s) and/or unicast frame(s). A unicast frame may refer to a frame transmitted in a unicast manner. For example, a receiver address field present in a MAC header of the unicast frame may be set to a unicast address, which is an address of an individual terminal.

The I-TWT information may include AP doze information but not AP awake information. In this case, a communication node (e.g., AP, STA) may estimate a period other than an AP doze period indicated by the AP doze information as an AP awake period. The I-TWT information may include AP awake information but not include AP doze information. In this case, a communication node (e.g., AP, STA) may estimate a period other than an AP awake period indicated by the AP awake information as an AP doze period.

A first value (e.g., 1) of a more data field included in a MAC header of a frame (e.g., data frame) transmitted by the AP 1 may indicate extension of an AP awake period of the AP 1. The more data field may refer to a more data bit. A field, subfield, or bit included in the MAC header of the frame transmitted by the AP 1, other than the more data field transmitted by the AP 1, may also indicate extension of an AP awake period of the AP 1. The AP 1 may indicate the B-TWT information or I-TWT information by transmitting a TWT information frame. The AP 1 may indicate extension and/or termination (e.g., early termination) of an AP awake period by transmitting a TWT information frame. The AP 1 may indicate extension and/or termination (e.g., early termination) of an AP doze period by transmitting a TWT information frame. The TWT information frame may be a frame including TWT information. An AP awake period of the AP 1 may be configured by transmitting a TWT information frame.

The AP 1 may extend an AP awake period for a period (e.g., transmit opportunity (TXOP)) during which the AP 1 performs transmission. Alternatively, the AP 1 may extend an AP awake period for a TXOP obtained by the STA(s). The AP 1 may extend an AP awake period until frame transmission(s) of the AP 1 and/or STA(s) (e.g., transmission of all data frames) are completed. A transmission completion time of a frame may refer to a transmission end time of the frame or a transmission end time of a response frame for the frame. The transmission end time of the frame may refer to a reception end time of the frame or a decoding end time of the frame from the perspective of the receiving node. A response frame may mean an acknowledgement (ACK) frame or a block ACK (BA) frame. If the more data field included in the frame (e.g., data frame) indicates that there is no more data (e.g., if the more data field included in the data frame is set to a second value (e.g., 0)), the AP 1 and/or STA(s) may determine that transmission of all data frames is completed. Alternatively, a field, subfield, or bit included in the MAC header of the frame, other than the more data field included in the frame, may indicate that there is no more data. If the AP 1 and/or STA(s) determine that transmission of all data frames is completed, the AP awake period may not be extended.

In the exemplary embodiment of FIG. 5B, the AP 1 may transmit a beacon frame on the first link. The beacon frame may include a counter. The counter may be referred to as an AP awake counter. The AP awake counter may be set to an integer greater than or equal to 0. The AP awake counter may be decremented by 1 whenever a frame (e.g., management frame such as beacon frame, probe response frame, or action frame) including the AP awake counter is transmitted. Alternatively, the AP 1 may arbitrarily decrement the AP awake counter. For example, the AP 1 may irregularly decrement the AP awake counter according to power saving requirements of the AP 1. The AP awake counter may be included in a separate frame other than the beacon frame. For example, the AP awake counter may be included in a management frame such as probe response frame or action frame. The AP awake counter may be included in a periodic frame (e.g., frame that is transmitted periodically) or an aperiodic frame (e.g., frame that is transmitted aperiodically). A periodic frame may refer to a frame that is transmitted periodically. An aperiodic frame may refer to a frame that is transmitted aperiodically. The AP awake counter may be included in the frame in form of an information element. The AP awake counter may be included in the frame in form of a subfield or field.

The AP 1 may perform an AP awake operation to transmit a frame including an AP awake counter. The AP awake counter set to 1 or more may indicate that the AP 1 is to perform an AP doze operation soon. For example, if the AP awake counter is set to a non-zero value (e.g., if the AP awake counter is set to 1 or 2), the AP 1 may perform an AP doze operation immediately after transmitting the frame including the AP awake counter. Alternatively, if the AP awake counter is set to 0, the AP 1 may perform an AP doze operation after a preset time from a transmission time (e.g., transmission start time or transmission end time) of the frame including the AP awake counter. In other words, the AP 1 may perform the AP awake operation during the preset time, and may transmit and receive frames during the preset time.

The AP doze operation of the AP 1 may be performed until a frame including the next AP awake counter is transmitted. The AP awake counter included in the frame transmitted by the AP 1, when set to 0, may indicate that the AP 1 performs the AP awake operation during a preset time (e.g., until a transmission period of the next beacon frame or during a separately set time). Alternatively, the AP awake counter included in the frame transmitted by the AP 1, when set to 0, may indicate that the AP 1 performs the AP awake operation during an arbitrary time.

The AP 1 may set an AP awake counter of the next frame to 0 or 1 or more after transmitting the frame including the AP awake counter set to 0. The AP awake counter set to 0 may indicate that the AP 1 continues to perform the AP awake operation. The AP awake counter set to 1 or more may indicate that the AP 1 suspends the AP awake operation and performs an AP doze operation.

The STA(s) may receive the frame including the AP awake counter of the AP 1 and identify the AP awake counter included in the frame. If the AP awake counter is set to 1 or more, the STA(s) may not transmit frame(s) to the AP 1 until receiving a frame including the next AP awake counter from the AP 1. In other words, the AP 1 may operate in the AP doze state until transmitting a frame including the next AP awake counter after transmitting the frame including the AP awake counter set to 1 or more. The STA(s) may not perform communication with the AP 1 being in the AP doze state. The STA(s) may operate in the doze state until receiving a frame including the next AP awake counter after receiving the frame including the AP awake counter set to 1 or more. Alternatively, the STA(s) may perform direct communications after receiving a frame including the AP awake counter set to 1 or more until the STA(s) receive a frame including the next AP awake counter.

If the AP awake counter included in the frame received from the AP 1 is set to 0, the STA(s) may perform frame transmission and reception operations with the AP 1 until the STA(s) receive a frame including the next AP awake counter from the AP 1. If the AP awake counter included in the frame received from the AP 1 is set to 1 or more, the STA(s) may not perform frame transmission and reception operations with the AP 1.

A frame transmitted by the AP 1 (e.g., beacon frame, probe response frame, action frame) may further include a B-TWT information element. The B-TWT information element may include information indicating a time when the AP 1 performs an AP awake operation. The B-TWT information element may be referred to as B-TWT information. The B-TWT information may include at least one of AP awake information or AP doze information. The AP doze information may include at least one of a start time, a length, an end time, or a periodicity of an AP doze period. The AP awake information may include at least one of a start time, a length, an end time, or a periodicity of an AP awake period. The AP doze information and AP awake information may have various forms such as information elements, subfields, or fields. The STA(s) may receive the frame (e.g., beacon frame, probe response frame, action frame) from the AP 1, may identify the B-TWT information included in the frame, and may identify the AP awake information and/or AP doze information included in the B-TWT information. The STA(s) may identify an AP awake period and AP doze period based on the AP awake information and/or AP doze information.

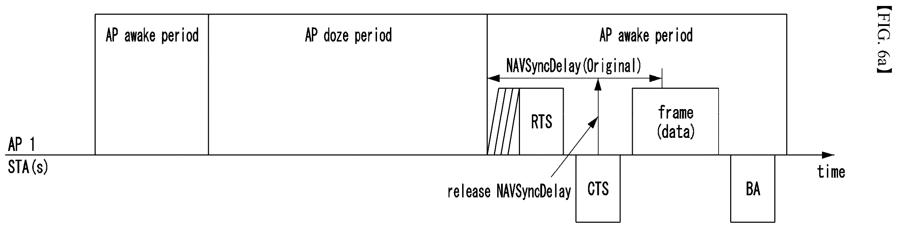

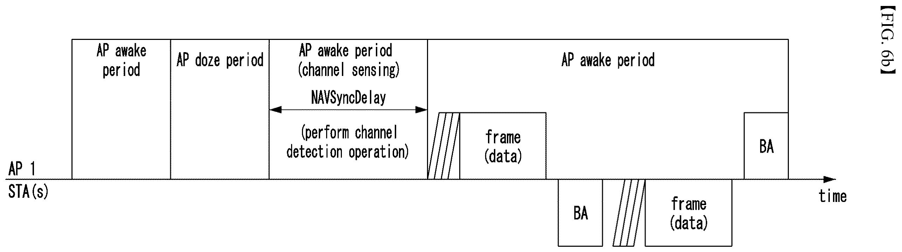

FIGS. 6A and 6B are timing diagrams illustrating exemplary embodiments of a power saving operation.

Referring to FIG. 6A and FIG. 6B, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with a STA MLD or STA(s) not affiliated with a STA MLD.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel detection operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., a period during which the AP performs an AP doze operation) may be referred to as an AP doze period. A period during which the AP (e.g., AP 1) operates in the AP awake state (e.g., a period during which the AP performs an AP awake operation) may be referred to as an AP awake period. When the AP 1 operates in the AP awake state, the STA(s) may transmit frames to the AP 1, and the STA(s) may receive frames from the AP 1. When the AP 1 operates in the AP doze state, the STA(s) may not transmit frames to the AP 1, and the STA(s) may not perform operation(s) to receive frames from the AP 1. When the AP 1 operates in the AP doze state, the STA(s) (e.g., STA(s) associated with the AP 1) may operate in a doze state (e.g., STA doze state). When the AP 1 operates in the AP awake state, the STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B.

In the exemplary embodiment of FIG. 6A, the AP 1 may discontinue the AP doze operation and perform the AP awake operation after discontinuing the AP doze operation. Since the AP 1 did not perform a channel detection operation during the AP doze period, the AP 1 may not normally set a network allocation vector (NAV). Therefore, a NAVSyncDelay, which is a time (e.g., timer) for setting a NAV in the AP awake period, may be set. The NAV may be a NAV caused by transmission of a communication node other than the AP 1. The NAVSyncDelay may be referred to as a NAV synchronization delay. For a time during which the NAVSyncDelay is set, the AP 1 may transmit a request-to-send (RTS) frame after performing a channel detection operation and/or a backoff operation. The NAVSyncDelay timer may be started from an end time of the AP doze period or a start time of the AP awake period. If the AP 1 normally receives a frame in the NAVSyncDelay period (e.g., if the AP 1 normally decodes the frame), the AP 1 may correctly set a NAV, and the NAVSyncDelay may be released. If an energy equal to or greater than a certain level is detected on a channel as a result of the channel detection operation in the NAVSyncDelay period, the AP 1 may not transmit the RTS frame.

The NAVSyncDelay may be a MediumSyncDelay. The MediumSyncDelay may be referred to as a medium synchronization delay. Each of the NAVSyncDelay and MediumSyncDelay may be a timer. In other words, the NAVSyncDelay may be a NAVSyncDelay timer, and the MediumSyncDelay may be a MediumSyncDelay timer. The NAVSyncDelay timer may be released when the AP 1 receives a frame without error. The NAVSyncDelay timer may be set to aPPDUMaxTime. The aPPDUMaxTime may be the maximum length of a PPDU. The length of the NAVSyncDelay timer may be shorter than the length of aPPDUMaxTime. Alternatively, the length of the NAVSyncDelay timer may be equal to or longer than the length of aPPDUMaxTime. The aPPDUMaxTime may be a time varying depending on specifications of a physical layer and MAC layer used by the wireless LAN terminal.

In the exemplary embodiment of FIG. 6B, the AP 1 may discontinue the AP doze operation and perform the AP awake operation after discontinuing the AP doze operation. Since the AP 1 did not perform a channel detection operation during the AP doze period, the AP 1 may not normally set a NAV. Therefore, the NAVSyncDelay, which is a time (e.g., timer) for setting a NAV in the AP awake period, may be set. In order for the AP 1 to perform communication during all parts of the AP awake period, the AP awake operation may be performed earlier by an amount equal to NAVSyncDelay than a preset time. That is, the AP 1 may perform the AP awake operation earlier than a start time of the configured AP awake period by the NAVSyncDelay.

The NAVSyncDelay may be the MediumSyncDelay. Each of the NAVSyncDelay and MediumSyncDelay may be a timer. In other words, the NAVSyncDelay may be a NAVSyncDelay timer, and the MediumSyncDelay may be a MediumSyncDelay timer. The NAVSyncDelay timer may be released when the AP 1 receives a frame without error. The NAVSyncDelay timer may be set to aPPDUMaxTime. aPPDUMaxTime may be the maximum length of a PPDU. The length of the NAVSyncDelay timer may be shorter than the length of aPPDUMaxTime. Alternatively, the length of the NAVSyncDelay timer may be greater than or equal to the length of aPPDUMaxTime. The aPPDUMaxTime may be a time varying depending on the specifications of the physical layer and MAC layer used by the wireless LAN terminal.

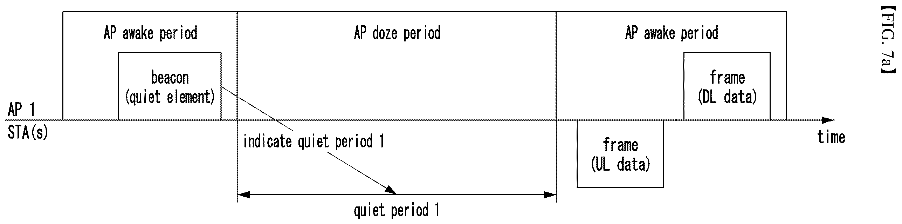

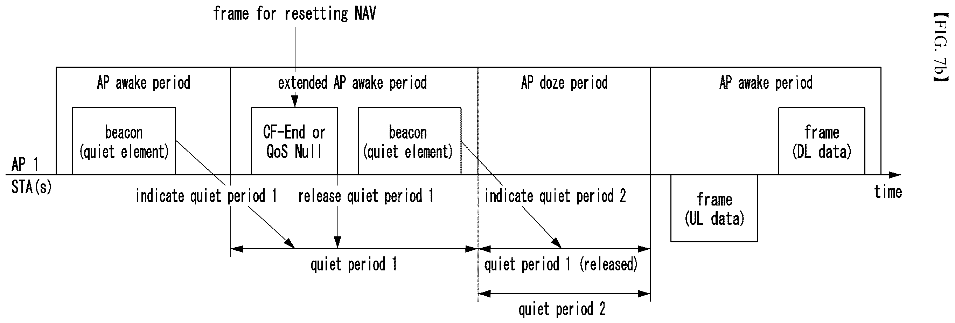

FIGS. 7A and 7B are timing diagrams illustrating exemplary embodiments of a power saving operation.

Referring to FIG. 7A and FIG. 7B, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with a STA MLD or STA(s) not affiliated with a STA MLD.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel detection operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., a period during which the AP performs an AP doze operation) may be referred to as an AP doze period. A period during which the AP (e.g., AP 1) operates in the AP awake state (e.g., a period during which the AP performs an AP awake operation) may be referred to as an AP awake period. When the AP 1 operates in the AP awake state, the STA(s) may transmit frames to the AP 1, and the STA(s) may receive frames from the AP 1. When the AP 1 operates in the AP doze state, the STA(s) may not transmit frames to the AP 1, and the STA(s) may not perform operation(s) to receive frames from the AP 1. When the AP 1 operates in the AP doze state, the STA(s) (e.g., STA(s) associated with the AP 1) may operate in a doze state (e.g., STA doze state). When the AP 1 operates in the AP awake state, the STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B.

In the exemplary embodiment of FIG. 7A, the AP 1 may discontinue the AP awake operation, and perform the AP doze operation after discontinuing the AP awake operation. Before performing the AP doze operation, the AP 1 may transmit a beacon frame or a probe response frame including a quiet element (e.g., quiet information element (IE), a quiet field). Alternatively, before performing the AP doze operation (e.g., before the operation state of the AP 1 transitions from the AP awake state to the AP doze state), the AP 1 may transmit an action frame including the quiet element. The quiet element may include information indicating a quiet period. A quiet channel element may be used instead of the quiet element. Alternatively, the quiet element and the quiet channel element may be used simultaneously. The quiet channel element may be an element to replace or supplement the quiet element, and may perform the same role as the quiet element. In the present disclosure, a frame including the quiet element may include the quiet channel element. The quiet period may be a period in which the STA(s) cannot transmit frames while the AP 1 operates in the AP doze state. The quiet period may be configured to be the same as the AP doze period. Alternatively, the quiet period may be configured to include the AP doze period. In other words, the quiet period may be configured to be longer than the AP doze period. Alternatively, the quiet period may be configured to be within the AP doze period. In other words, the quiet period may be configured to be shorter than the AP doze period. The quiet period may be configured to include a part of the AP doze period.

The AP 1 may transmit a frame including a quiet element indicating a quiet period 1 to the STA(s). The quiet element may include at least one of a start time, an end time, a length, or a periodicity of the quiet period 1. The STA(s) may receive the frame (e.g., beacon frame, probe response frame, action frame) from the AP 1, and may identify the quiet element included in the frame. The STA(s) may identify the quiet period 1 based on the quiet element. In other words, the STA(s) may configure the quiet period 1. The operation of configuring the quiet period 1 may be an operation of configuring a period in which the STA(s) do not perform frame transmission. In other words, the operation of configuring the quiet period 1 may be an operation of setting an NAV. The STA(s) may set an NAV corresponding to the quiet period 1 based on the quiet element. During the period for which the NAV is set, frame transmission of the STA(s) may be impossible.

The AP 1 may transmit a frame including a plurality of quiet elements (e.g., management frame such as beacon frame, probe response frame, or action frame) to the STA(s). The plurality of quiet elements may indicate a plurality of quiet periods. For example, a quiet element 1 may indicate a quiet period 1, and a quiet element 2 may indicate a quiet period 2. The plurality of quiet periods (e.g., quiet period 1, quiet period 2) may be independently configured. The STA(s) may receive the frame from the AP 1 and identify the plurality of quiet elements included in the frame. The STA(s) may configure the plurality of quiet periods based on the plurality of quiet elements. The STA(s) may not perform frame transmission and reception operations in the plurality of quiet periods.

In the exemplary embodiment of FIG. 7B, the AP 1 may extend the AP awake operation (e.g., AP awake state, AP awake period). When the AP awake period is extended, the AP 1 may transmit, to the STA(s), a frame (e.g., contention free (CF)-End frame, quality of service (QoS) Null frame) indicating release of the quiet period 1 (e.g., NAV) configured by the previously transmitted quiet element. The frame indicating release of the quiet period may be referred to as a quiet release frame. The quiet release frame may be transmitted before the quiet period 1 is configured. The CF-End frame may be a frame indicating to set an NAV. A duration field included in a MAC header of the QoS Null frame may be set to 0. In other words, a value of the duration field may indicate 0. Additionally, the MAC header of the QoS Null frame may include a separate indicator to indicate to release a NAV. The separate indicator may be included in a HT control field of the QoS Null frame in form of an A-control.

The STA(s) may receive the quiet release frame from the AP 1 and release the quiet period 1 (e.g., NAV corresponding to the quiet period 1) indicated by the quiet release frame. The quiet release frame may include information of the quiet period 1 to be released (e.g., identifier of the quiet period 1). Communication (e.g., frame transmission and reception operations) between the AP and STA(s) may be performed in the released quiet period 1. The released quiet period 1 may be an extended AP awake period.

When the extended AP awake period ends, the AP 1 may transmit a management frame (e.g., beacon frame, probe response frame, action frame) including a quiet element to the STA(s). The frame including the quiet element may be transmitted before the extended AP awake period ends. The quiet element may include information indicating a quiet period 2. The STA(s) may receive the frame from the AP 1, identify the quiet element included in the frame, and configure the quiet period 2 based on the quiet element. The operation of configuring the quiet period 2 may be an operation of setting an NAV. The STA(s) may set an NAV corresponding to the quiet period 2 based on the quiet element. Frame transmissions of the STA(s) may be impossible during a period for which the NAV is set.

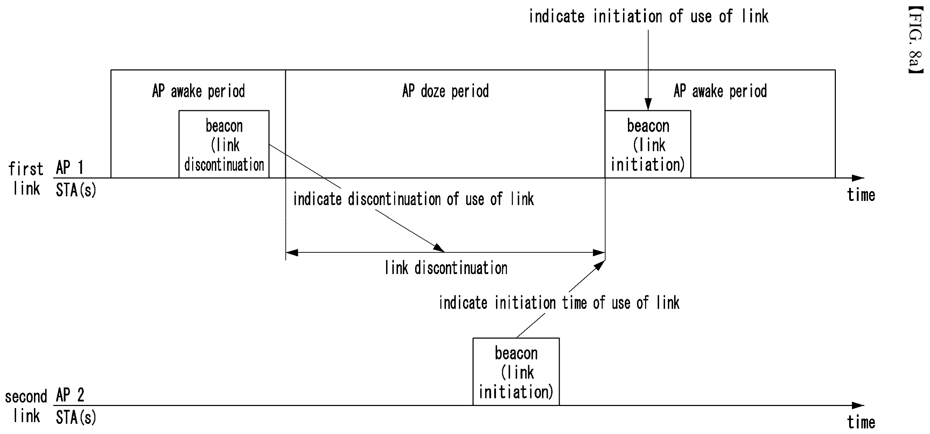

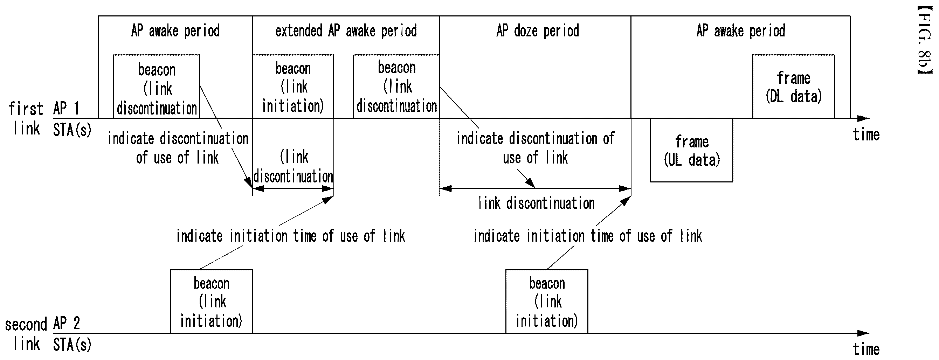

FIGS. 8A and 8B are timing diagrams illustrating exemplary embodiments of a power saving operation.

Referring to FIGS. 8A and 8B, an AP 1 and one or more STAs may operate on a first link. An AP 2 and one or more STAs may operate on a second link. The AP 1 may be affiliated with an AP MLD. In other words, the AP of the AP MLD operating on the first link may be the AP 1, and the AP of the AP MLD operating on the second link may be the AP 2. Similarly, the one or more STAs may be affiliated with an STA MLD and may operate on the first link and the second link.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel detection operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., a period during which the AP performs an AP doze operation) may be referred to as an AP doze period. A period during which the AP (e.g., AP 1) operates in the AP awake state (e.g., a period during which the AP performs an AP awake operation) may be referred to as an AP awake period. When the AP 1 operates in the AP awake state, the STA(s) may transmit frames to the AP 1, and the STA(s) may receive frames from the AP 1. When the AP 1 operates in the AP doze state, the STA(s) may not transmit frames to the AP 1, and the STA(s) may not perform operation(s) to receive frames from the AP 1. When the AP 1 operates in the AP doze state, the STA(s) (e.g., STA(s) associated with the AP 1) may operate in a doze state (e.g., STA doze state). When the AP 1 operates in the AP awake state, the STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B.

In the exemplary embodiment of FIG. 8A, the AP 1 may discontinue the AP awake operation, and perform the AP doze operation after discontinuing the AP awake operation. Before performing the AP doze operation (e.g., before the operation state of the AP 1 transitions from the AP awake state to the AP doze state), the AP 1 may transmit a frame (e.g., management frame such as beacon frame, probe response frame, or action frame) including traffic identifier (TID)-to-link mapping information to the STA(s). The TID-to-link mapping information may indicate discontinuation of use of the first link. For example, the TID-to-link mapping information may indicate that no TID is mapped to the first link. No TID being mapped to the first link may mean discontinuation of use of the first link. Information (e.g., TID-to-link mapping information) indicating that no TID is mapped to a specific link (e.g., the first link) may be referred to as usage discontinuation information. The usage discontinuation information may be link discontinuation information. Usage discontinuation may mean usage disable.

The usage discontinuation information may include information on a usage discontinuation time of the first link. The information on the usage discontinuation time may include at least one of a start time, an end time, a length, or a periodicity of the usage discontinuation time (e.g., usage discontinuation period). The frame (e.g., management frame such as beacon frame, probe response frame, or action frame) including the usage discontinuation information of the first link may be transmitted on the second link. In other words, the AP 2 may indicate discontinuation of use of the first link on which the AP 1 operates by transmitting the usage discontinuation information on the second link. The usage discontinuation information of the first link may be transmitted on the first link and/or the second link. The STA(s) may receive the frame from the AP 1 and/or AP 2, and may identify the usage discontinuation time (e.g., usage discontinuation period) of the first link based on the usage discontinuation information included in the frame. The STA(s) may not perform frame transmission and reception operations with the AP 1 from the usage discontinuation time of the first link.

The AP 1 may perform the AP awake operation after terminating the AP doze operation. In other words, when the AP doze period ends, the AP 1 may perform the AP awake operation. When the AP awake operation starts, the AP 1 may transmit a frame (e.g., beacon frame, probe response frame, action frame) including TID-to-link mapping information to the STA(s). The TID-to-link mapping information may indicate initiation of use of the first link. For example, the TID-to-link mapping information may indicate that one or more TIDs are mapped to the first link. One or more TIDs being mapped to the first link may mean initiation of use of the first link. Information (e.g., TID-to-link mapping information) indicating that one or more TIDs are mapped to a specific link (e.g., the first link) may be referred to as usage initiation information. The usage initiation information may be link initiation information. The usage initiation may mean usage enable. The usage initiation may be interpreted as usage resume depending on a context.

The usage initiation information may include information on an usage initiation time of the first link. The information on the usage initiation time may be at least one of a start time, an end time, or a length of the usage initiation time (e.g., usage initiation period). A frame (e.g., beacon frame, probe response frame, action frame) including the usage initiation information of the first link may be transmitted on the second link. In other words, the AP 2 may indicate initiation of use of the first link on which the AP 1 operates by transmitting the usage initiation information on the second link. The usage initiation information of the first link may be transmitted on the first link and/or the second link. The STA(s) may receive the frame from the AP 1 and/or AP 2, and may identify the usage initiation time of the first link (e.g., usage initiation period) based on the usage initiation information included in the frame. The STA(s) may perform frame transmission and reception operations with the AP 1 from the usage initiation time of the first link.

The AP 1 may transmit a frame (e.g., beacon frame, probe response frame, action frame) including link discontinuation information (e.g., usage discontinuation information), link initiation information (e.g., usage initiation information), or link discontinuation/initiation repetition information. The link discontinuation/initiation repetition information may indicate whether link discontinuation and link initiation are repeated. In this case, the TID-to-link mapping information may be set to a specific value, and the TID-to-link mapping information set to the specific value may indicate that the TID-to-link mapping information (e.g., TID(s) and/or link(s) indicated by the TID-to-link mapping information) is suspended during a link discontinuation period (e.g., usage discontinuation period).

In the exemplary embodiment of FIG. 8B, the AP 1 may extend the AP awake operation (e.g., AP awake state, AP awake period). When the AP awake period is extended, the AP 1 may indicate initiation of use of the first link. In other words, the AP 1 may transmit a frame (e.g., beacon frame, probe response frame, or action frame) including usage initiation information of the first link to the STA(s). The usage initiation information of the first link may be transmitted before the usage of the first link is discontinued. The AP 2 may indicate initiation of use of the first link by transmitting usage initiation information of the first link on the second link. The AP awake period may be extended by the usage initiation information. The STA(s) may perform communication with the AP 1 during the extended AP awake period.

When the extended AP awake period ends, the AP 1 may transmit a frame including usage discontinuation information of the first link to the STA(s) to perform the AP doze operation. The AP 2 may transmit a frame including usage discontinuation information of the first link. In other words, the usage discontinuation information of the first link may be transmitted on the first link and/or the second link. The STA(s) may receive the frame including the usage discontinuation information of the first link from the AP 1 and/or AP 2. The STA(s) may determine the usage discontinuation time (e.g., usage discontinuation period) based on the usage discontinuation information, and may not perform frame transmission/reception operations with the AP 1 in the usage discontinuation time.

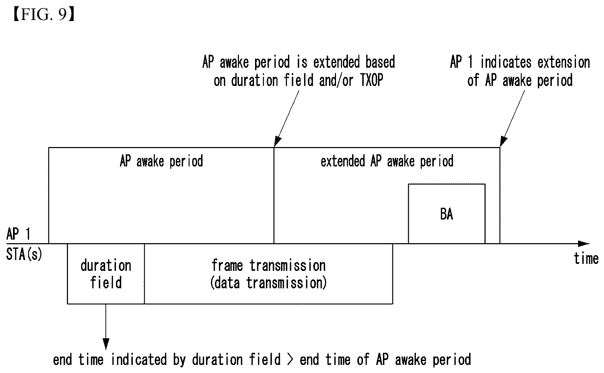

FIG. 9 is a timing diagram illustrating exemplary embodiments of power a saving operation.

Referring to FIG. 9, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with an STA MLD or STA(s) not affiliated with an STA MLD.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel detection operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., a period during which the AP performs an AP doze operation) may be referred to as an AP doze period. A period during which the AP (e.g., AP 1) operates in the AP awake state (e.g., a period during which the AP performs an AP awake operation) may be referred to as an AP awake period. When the AP 1 operates in the AP awake state, the STA(s) may transmit frames to the AP 1, and the STA(s) may receive frames from the AP 1. When the AP 1 operates in the AP doze state, the STA(s) may not transmit frames to the AP 1, and the STA(s) may not perform operation(s) to receive frames from the AP 1. When the AP 1 operates in the AP doze state, the STA(s) (e.g., STA(s) associated with the AP 1) may operate in a doze state (e.g., STA doze state). When the AP 1 operates in the AP awake state, the STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B. For example, the AP 1 may always perform the AP doze operation, and may perform the AP awake operation when receiving a specific frame. The AP 1 may perform the AP doze operation again when frame exchange is completed.

While the AP 1 operates in the AP awake state, the STA(s) may transmit frames (e.g., data frames) to the AP 1. An end time of a period indicated by a duration field included in a MAC header of the frame transmitted by the STA(s) may be after an end time of the AP awake period. The duration field included in the MAC header of the frame transmitted by the STA(s) may indicate a TXOP obtained by the STA(s). In other words, the end time of frame transmission by the STA may be after the end time of the AP awake period. The AP 1 may identify the duration field included in the MAC header of the frame received from the STA(s) and determine that the end time of the period indicated by the duration field is after the end time of the AP awake period. In this case, the AP 1 may extend the AP awake period. In other words, the AP 1 may extend the AP awake period based on a value (e.g., length) indicated by the duration field included in the MAC header of the frame (e.g., data frame) received from the STA(s). The AP 1 may transmit a frame indicating extension of the AP awake period to the STA(s). The frame indicating extension of the AP awake period may be a response frame (e.g., ACK frame, BA frame) for the frame transmitted by the STA(s). The AP awake period may be extended up to the end time of the TXOP obtained by the STA(s) or a time after the end time of the TXOP. Alternatively, the frame indicating extension of the AP awake period may be a frame transmitted by the AP 1 in a separate TXOP.

Alternatively, while the AP 1 operates in the AP awake state, the AP 1 may transmit a frame (e.g., data frame) to the STA(s). An end time of a period indicated by a duration field included in a MAC header of the frame transmitted by the AP 1 may be after an end time of the AP awake period. In other words, the AP 1 may determine that a transmission end time of the frame is after the end time of the AP awake period based on the duration field. In this case, the AP 1 may extend the AP awake period. The AP 1 may transmit a frame indicating extension of the AP awake period to the STA(s). The AP 1 may complete transmission of the frame in the extended AP awake period. Alternatively, if it is expected that the transmission end time of the frame transmitted by the AP 1 is after the end time of the AP awake period, the AP 1 may perform segmented transmission of the frame such that an end time of frame transmission is not later than the end time of the AP awake period.

The AP awake period may be extended beyond the TXOP obtained by the AP 1 and/or STA(s). Alternatively, the AP awake period may be extended based on a value (e.g., length) indicated by the duration field included in the MAC header of the frame transmitted by the AP 1 and/or STA(s). For example, the AP awake period may be extended beyond the length indicated by the duration field. The AP awake period may be extended by 'the length (e.g., the end time of the period) indicated by the duration field - the length (end time) of the AP awake period'.

A more data field (e.g., more data bit) included in the MAC header of the frame transmitted by the AP 1 and/or STA(s) may indicate that there is more data to be transmitted. For example, the more data field may be set to a first value (e.g., 1). A field, subfield, or bit included in the MAC header of the frame transmitted by the AP 1, other than the more data field transmitted by the AP 1, may also indicate extension of the AP awake period of the AP 1. In this case, the AP awake period may be extended based on the duration field included in the MAC header of the frame and/or a TXOP. Alternatively, if a more data field (e.g., more data bit) included in the MAC header of the frame transmitted by the AP 1 and/or STA(s) indicates that there is more data to be transmitted, the AP awake period may be automatically extended. The AP 1 and/or STA may transmit a frame including a more data field indicating that there is no more data to be transmitted. For example, the more data field may be set to a second value (e.g., 0). In this case, the AP awake period may be extended until an end time of a TXOP for the frame including the more data field set to the second value. A field, subfield, or bit included in the MAC header of the frame transmitted by the AP 1, other than the more data field transmitted by the AP 1, may also indicate extension of the AP awake period of the AP 1. The AP awake period may be extended until a time indicated by the duration field included in the frame including the more data field set to the second value.

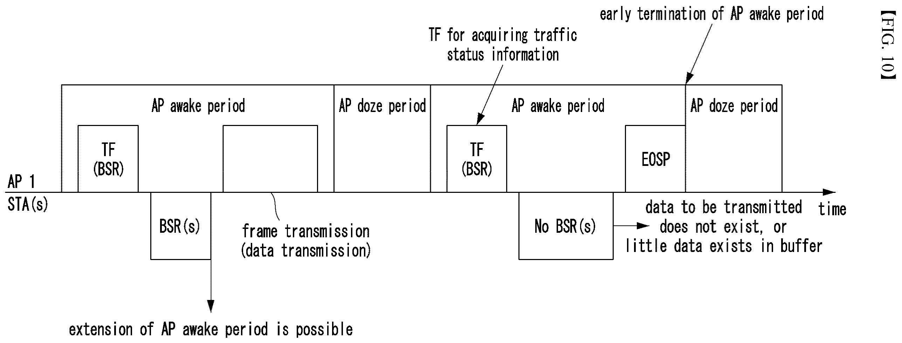

FIG. 10 is a timing diagram illustrating exemplary embodiments of a power saving operation.

Referring to FIG. 10, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with an STA MLD or STA(s) not affiliated with an STA MLD.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel sensing operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., period during which the AP performs the AP doze operation) may be referred to as an AP doze period. A period during which the AP (e.g., AP 1) operates in the AP awake state (e.g., period during which the AP performs the AP awake operation) may be referred to as an AP awake period. When the AP 1 operates in the AP awake state, STA(s) may transmit frames to the AP 1, and STA(s) may receive frames from the AP 1. When the AP 1 operates in the AP doze state, STA(s) may not transmit frames to the AP 1, and STA(s) may not perform operation(s) to receive frames from the AP 1. When the AP 1 operates in the AP doze state, STA(s) (e.g., STA(s) associated with the AP 1) may operate in a doze state (e.g., STA doze state). When the AP 1 operates in the AP awake state, STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B. For example, the AP 1 may always perform the AP doze operation, and may perform the AP awake operation when receiving a specific frame. The AP 1 may perform the AP doze operation again when frame exchange is completed.

The AP 1 may transmit a trigger frame while operating in the AP Awake state. The trigger frame may be referred to as a TF. The trigger frame may be a buffer status report poll (BSRP) trigger frame. The BSRP trigger frame may be a frame that requests the STA(s) to transmit a buffer status report (BSR) frame. The BSR frame may be a frame that indicates a traffic status of the STA(s). In other words, the BSRP trigger frame may request transmission of information on a traffic status (e.g., traffic situation) of the STA(s). Upon receiving the BSRP trigger frame, the STA(s) may transmit the BSR frame(s). The BSRP trigger frame may include information indicating association identifier(s) (AID(s)) of the STA(s) to indicate resource(s) (e.g., resource(s) for transmitting the BSR frame(s)). The BSRP trigger frame may instruct the STA(s) to access a channel in an uplink orthogonal frequency division multiple access (OFDMA) random access (UORA) manner to indicate resource(s). The AP 1 may transmit the BSRP trigger frame by mixing the AID(s) of the STA(s) and an AID allocated exclusively for UORA. Alternatively, the AP 1 may allocate resources using either the AID(s) of the STA(s) or the AID allocated exclusively for UORA. If each of the STA(s) identifies an AID allocated to itself in the BSRP trigger frame, it may transmit the BSR frame in the corresponding resource. If each of the STAs does not identify an AID allocated to itself in the BSRP trigger frame, it may perform random channel access based on the AID allocated exclusively for UORA, and if the random channel access is successful, it may transmit the BSR frame in a corresponding resource.

The BSR frame may include information on data (e.g., frame(s)) to be transmitted by the STA(s). The AP 1 may determine the data to be transmitted by the STA(s) based on information included in the BSR frame(s) received from the STA(s). The BSR frame(s) may indicate that data to be transmitted exists in the STA(s). The AP 1 may receive the BSR frame(s) from STA(s) and maintain or extend the AP awake period (e.g., AP awake operation) based on information included in the BSR frame(s). During the AP awake period, data frame transmission and reception operations between the AP 1 and STA(s) may be performed.

Even when the BSRP trigger frame is received, the STA(s) may not transmit BSR frame(s) to the AP 1. For example, if data to be transmitted does not exist in the STA(s), the STA(s) may not transmit BSR frame(s) to the AP 1. Alternatively, the BSR frame(s) transmitted by the STA(s) may include information indicating that no data to be transmitted exists in the STA(s). Alternatively, the BSR frame(s) may include information indicating that the STA(s) have little data to transmit. In other words, the BSR frame(s) may include information indicating that little traffic exists in buffer(s) of the STA(s).

The AP 1 may early terminate the AP awake period based on information included in the BSR frame(s). For example, if the information included in the BSR frame(s) indicates that there is no data to be transmitted in the STA(s) or the information included in the BSR frame(s) indicates that there is little data to be transmitted by the STA(s), the AP 1 may early terminate the AP awake period.

The AP 1 may transmit a frame (e.g., QoS Null frame, QoS data frame, action frame, or arbitrary frame) indicating termination (e.g., early termination) of the AP awake period. After the frame indicating termination of the AP awake period is transmitted, the AP awake period may be terminated (e.g., early terminated). A frame including a MAC header including an end of service period (EOSP) bit (e.g., EOSP field) set to a first value (e.g., 1) may indicate termination (e.g., early termination) of the AP awake period. In other words, the frame including information indicating termination of a service period may indicate termination (e.g., early termination) of the AP awake period. Alternatively, a frame including a MAC header including a more data bit set to a second value (e.g., 0) may indicate termination (e.g., early termination) of the AP awake period. In other words, a frame including information indicating that there is no more data to be transmitted may indicate termination (e.g., early termination) of the AP awake period. Alternatively, a frame including information indicating termination of a TWT may indicate termination (e.g., early termination) of the AP awake period.

The AP 1 may extend the AP awake period based on the information included in the BSR frame(s). For example, if at least one of the information included in the BSR frame(s) indicating that no data to be transmitted exists in the STA(s) or the information included in the BSR frame(s) indicating that the STA(s) have little data to be transmitted is not satisfied, the AP 1 may extend the AP awake period to allow the STAs to perform data transmission during the AP awake period.

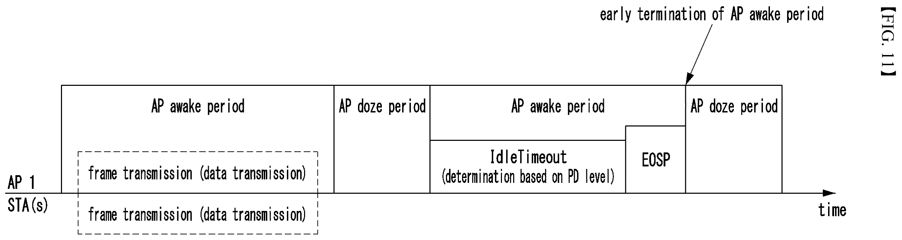

FIG. 11 is a timing diagram illustrating exemplary embodiments of a power saving operation.

Referring to FIG. 11, an AP 1 and one or more STAs may operate on a first link. The AP 1 may operate independently. The AP 1 may or may not be affiliated with an AP MLD. In other words, the AP 1 may be an AP affiliated with an AP MLD or an AP not affiliated with an AP MLD. The one or more STAs may operate independently. The one or more STAs may or may not be affiliated with an STA MLD. In other words, the one or more STAs may be STA(s) affiliated with an STA MLD or STA(s) not affiliated with an STA MLD.

The AP 1 may perform a power saving operation. A power saving operation performed in an AP (e.g., AP 1) may be referred to as an AP power saving operation. A power saving operation performed in a STA may be referred to as a STA power saving operation. In the power saving operation of the AP 1, the AP 1 may operate in an AP doze state or an AP awake state. In the AP doze state, the AP 1 may not perform at least one of a frame transmission operation, a frame reception operation, or a channel sensing operation. In other words, communication operations of the AP 1 in the AP doze state may be more restricted than communication operations of the AP 1 in the AP awake state. In the AP doze state, the AP 1 may exceptionally perform a transmission and reception operation of a specific frame (e.g., beacon frame). In the AP awake state, the AP 1 may perform at least one of a frame transmission operation, a frame reception operation, or a channel detection operation. The channel detection operation may refer to a channel sensing operation and/or a CCA operation.

A period during which the AP (e.g., AP 1) operates in the AP doze state (e.g., period during which the AP performs the AP doze operation) may be referred to as an AP doze period. A period during which the AP (e.g., AP 1) operates in the AP awake state (e.g., period during which the AP performs the AP awake operation) may be referred to as an AP awake period. When the AP 1 operates in the AP awake state, STA(s) may transmit frames to the AP 1, and STA(s) may receive frames from the AP 1. When the AP 1 operates in the AP doze state, STA(s) may not transmit frames to the AP 1, and STA(s) may not perform operation(s) to receive frames from the AP 1. When the AP 1 operates in the AP doze state, STA(s) (e.g., STA(s) associated with the AP 1) may operate in a doze state (e.g., STA doze state). When the AP 1 operates in the AP awake state, STA(s) (e.g., STA(s) associated with the AP 1) may operate in an awake state (e.g., STA awake state).

In the time domain, the AP awake period and the AP doze period may be repeated. For example, an AP doze period may be configured after an AP awake period ends, and an AP awake period may be configured after an AP doze period ends. An end time of an AP doze period may be the same as a start time of an AP awake period, or a gap period may be configured between the end time of the AP doze period and the start time of the AP awake period. An end time of an AP awake period may be the same as a start time of an AP doze period, or a gap period may be configured between the end time of the AP awake period and the start time of the AP doze period. When a gap period is configured, an AP doze period may start after a configured gap period from an end time of an AP awake period, and an AP awake period may start after a configured gap period from an end time of an AP doze period. The AP 1 may transmit a frame including information on the gap period to the STA(s). The STA(s) may receive the frame including information on the gap period from the AP 1, and may identify the gap period based on the information included in the frame. The information on the gap period may be included in AP awake information and/or AP doze information.

The AP doze state (e.g., AP doze operation, AP doze period, AP doze information) and/or the AP awake state (e.g., AP awake operation, AP awake period, AP awake information) of the AP 1 may be configured identically or similarly to the exemplary embodiments of FIG. 5A and/or FIG. 5B. Alternatively, the AP doze state (e.g., AP doze operation, AP doze period, AP doze information) and/or the AP awake state (e.g., AP awake operation, AP awake period, AP awake information) of the AP 1 may be based on configuration different from that of the exemplary embodiments of FIG. 5A and/or FIG. 5B.

While the AP 1 operates in the AP Awake state, the AP 1 may perform a channel detection operation. The AP 1 may perform the channel detection operation for a time corresponding to an IdleTimeout timer. Within the time corresponding to the IdleTimeout timer, the STA(s) may transmit frame(s) (e.g., data frame(s)) to the AP 1. The AP 1 may receive the frame(s) from the STA(s) and initialize the IdleTimeout timer. The IdleTimeout timer may be initialized when the AP 1 transmits and receives a frame (e.g., data frame) and/or when the AP 1 detects energy on the channel. Whether energy is detected on the channel may be determined based on a power detection (PD) level and/or an energy detection (ED) level.

The IdleTimeout timer of the AP 1 may expire. When the IdleTimeout timer of the AP 1 expires, the AP 1 may determine that there is no activity (e.g., frame transmission and reception operation, communication) on the channel, and may terminate (e.g., early terminate) the AP awake period. The AP 1 may transmit a frame (e.g., QoS Null frame, QoS data frame, action frame, or arbitrary frame) indicating termination (e.g., early termination) of the AP awake period. After the frame indicating termination of the AP awake period is transmitted, the AP awake period may be terminated (e.g., early terminated). A frame including a MAC header including an EOSP bit (e.g., EOSP field) set to a first value (e.g., 1) may indicate termination (e.g., early termination) of the AP awake period. In other words, a frame including information indicating termination of a service period may indicate termination (e.g., early termination) of the AP awake period.

Alternatively, a frame including a MAC header with a more data bit set to a second value (e.g., 0) may indicate termination (e.g., early termination) of the AP awake period. In other words, a frame including information indicating that there is no more data to be transmitted may indicate termination (e.g., early termination) of the AP awake period. Alternatively, a frame including information indicating termination of a TWT may indicate termination (e.g., early termination) of the AP awake period.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of an access point (AP), comprising:
transmitting a first frame including AP power saving information to one or more stations (STAs);
operating in an AP doze state in an AP doze period indicated by the AP power saving information; and
operating in an AP awake state in an AP awake period indicated by the AP power saving information,
wherein communication between the AP and the one or more STAs is not performed in the AP doze period, and communication between the AP and the one or more STAs is performed in the AP awake period.

2. The method of claim 1, wherein the AP power saving information includes at least one of AP doze information or AP awake information, the AP doze information includes at least one of a start time, an end time, a length, or a periodicity of the AP doze period, and the AP awake information includes at least one of a start time, an end time, a length, or a periodicity of the AP awake period.

3. The method of claim 1, wherein the AP power saving information includes an AP awake counter, a first value of the AP awake counter indicates that the AP operates in the AP doze state after transmission of the first frame, and a second value of the AP awake counter indicates that the AP operates in the AP awake state after transmission of the first frame.

4. The method of claim 1, wherein the operating in the AP awake state comprises: performing at least one of a channel detection operation or a backoff operation during a preconfigured period after or before a start time of the AP awake period to set a network allocation vector (NAV).

5. The method of claim 1, wherein the operating in the AP awake state comprises: transmitting a second frame including information indicating a quiet period to the one or more STAs before an operation state of the AP transitions from the AP awake state to the AP doze state, and the quiet period is configured to correspond to the AP doze period after the AP awake period.

6. The method of claim 5, wherein the operating in the AP awake state comprises: transmitting a third frame including information indicating release of the quiet period to the one or more STAs to extend the AP awake period, and communication between the AP and the one or more STAs is performed in the extended AP awake period.

7. The method of claim 1, wherein the operating in the AP awake state comprises: transmitting a fourth frame including information indicating discontinuation of use of a link on which the AP operates to the one or more STAs before an operation state of the AP transitions from the AP awake state to the AP doze state, the information indicating discontinuation of use of the link is first traffic identifier (TID)-to-link mapping information, and the first TID-to-link mapping information indicates that no TID is mapped to the link.

8. The method of claim 7, wherein the operating in the AP awake state comprises: transmitting a fifth frame including information indicating initiation of use of the link to the one or more STAs to extend the AP awake period, the information indicating initiation of use of the link is second TID-to-link mapping information, the second TID-to-link mapping information indicates that one or more TIDs are mapped to the link, and communication between the AP and the one or more STAs is performed in the extended AP awake period.

9. The method of claim 1, wherein the operating in the AP awake state comprises:
receiving a sixth frame from a first STA among the one or more STAs;
identifying a transmission end time of the sixth frame based on a duration field included in the sixth frame; and
in response to the transmission end time being after an end time of the AP awake period, extending the AP awake period.

10. The method of claim 1, wherein the operating in the AP awake state comprises:
receiving a seventh frame from a first STA among the one or more STAs; and
determining whether to extend the AP awake period based on information included in the seventh frame,
wherein the information included in the seventh frame indicates whether data to be transmitted exists in the first STA, the AP awake period is determined to be extended when data to be transmitted exists in the first STA, and the AP awake period is determined not to be extended when data to be transmitted does not exist in the first STA.

11. The method of claim 1, wherein the operating in the AP awake state comprises:
performing a channel detection operation in a preconfigured period within the AP awake period; and
in response to determining that communication is not performed based on a result of the channel detection operation, transmitting an eighth frame including information indicating early termination of the AP awake period to the one or more STAs.

12. A method of a station (STA), comprising:
receiving a first frame including access point (AP) power saving information from an AP;
identifying an AP doze period and an AP awake period based on the AP power saving information; and
performing communication with the AP in the AP awake period,
wherein communication between the STA and the AP is not performed in the AP doze period.

13. The method of claim 12, wherein the AP power saving information includes at least one of AP doze information or AP awake information, the AP doze information includes at least one of a start time, an end time, a length, or a periodicity of the AP doze period, and the AP awake information includes at least one of a start time, an end time, a length, or a periodicity of the AP awake period.

14. The method of claim 12, wherein the AP power saving information includes an AP awake counter, a first value of the AP awake counter indicates that the AP operates in the AP doze state after transmission of the first frame, and a second value of the AP awake counter indicates that the AP operates in the AP awake state after transmission of the first frame.

15. The method of claim 12, wherein the performing of the communication with the AP comprises: receiving a second frame including information indicating a quiet period from the AP before an operation state of the AP transitions from the AP awake state to the AP doze state, and the quiet period is configured to correspond to the AP doze period after the AP awake period.

16. The method of claim 15, wherein the performing of the communication with the AP comprises: receiving a third frame including information indicating release of the quiet period from the AP to extend the AP awake period, and communication between the AP and the STA is performed in the extended AP awake period.

17. The method of claim 12, wherein the performing of the communication with the AP comprises: receiving a fourth frame including information indicating discontinuation of use of a link on which the AP operates from the AP before an operation state of the AP transitions from the AP awake state to the AP doze state, the information indicating discontinuation of use of the link is first traffic identifier (TID)-to-link mapping information, and the first TID-to-link mapping information indicates that no TID is mapped to the link.

18. The method of claim 17, wherein the performing of the communication with the AP comprises: receiving a fifth frame including information indicating initiation of use of the link from the AP to extend the AP awake period, the information indicating initiation of use of the link is second TID-to-link mapping information, the second TID-to-link mapping information indicates that one or more TIDs are mapped to the link, and communication between the AP and the STA is performed in the extended AP awake period.

19. The method of claim 12, wherein the performing of the communication with the AP comprises:
transmitting a sixth frame including a duration field indicating a transmission end time for the sixth frame to the AP; and
in response to the transmission end time for the sixth frame being after an end time of the AP awake period, receiving information indicating extension of the AP awake period from the AP,
wherein the AP awake period is not extended when the transmission end time for the sixth frame is before the end time of the AP awake period.

20. The method of claim 12, wherein the performing of the communication with the AP comprises:
transmitting a seventh frame including information indicating whether data to be transmitted exists in the STA to the AP; and
in response to data to be transmitted existing in the STA, receiving information indicating extension of the AP awake period from the AP,
wherein the AP awake period is not extended when data to be transmitted does not exist in the STA.
